(19) Europäisches Patentamt
European Patent Office
Office européen des brevets

(11) EP 2 072 594 A1

(12) EUROPEAN PATENT APPLICATION
published in accordance with Art. 153(4) EPC

(43) Date of publication:
**24.06.2009 Bulletin 2009/26**

(21) Application number: **07829458.4**

(22) Date of filing: **10.10.2007**

(51) Int Cl.:
***C09J 7/02*** *(2006.01)* ***B32B 27/00*** *(2006.01)*
***B32B 27/30*** *(2006.01)* ***C09J 133/08*** *(2006.01)*

(86) International application number:
**PCT/JP2007/069720**

(87) International publication number:
**WO 2008/047636 (24.04.2008 Gazette 2008/17)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.10.2006 JP 2006278377**

(71) Applicant: **NITTO DENKO CORPORATION**
**Ibaraki-shi**
**Osaka 567-8680 (JP)**

(72) Inventors:
- **KONDOU, Takashi**
  **Ibaraki-shi**
  **Osaka 5678680 (JP)**
- **SHIRAI, Mitsuyoshi**
  **Ibaraki-shi**
  **Osaka 5678680 (JP)**
- **UESUGI, Masanori**
  **Ibaraki-shi**
  **Osaka 5678680 (JP)**
- **OKAMOTO, Masayuki**
  **Ibaraki-shi**
  **Osaka 5678680 (JP)**
- **MAEDA, Kazuhisa**
  **Ibaraki-shi**
  **Osaka 5678680 (JP)**
- **HIROSE, Tetsuya**
  **Ibaraki-shi**
  **Osaka 5678680 (JP)**
- **INOKUCHI, Shinji**
  **Ibaraki-shi**
  **Osaka 5678680 (JP)**

(74) Representative: **Grünecker, Kinkeldey,**
**Stockmair & Schwanhäusser**
**Anwaltssozietät**
**Leopoldstrasse 4**
**80802 München (DE)**

# (54) ACRYLIC ADHESIVE TAPE OR SHEET, AND METHOD FOR PRODUCING THE SAME

(57) Disclosed is an acrylic pressure-sensitive adhesive tape or sheet that exhibits satisfactory adhesion to hard-to-adhere adherends.

The acrylic pressure-sensitive adhesive tape or sheet includes a microsphere-containing viscoelastic layer (X); and a pressure-sensitive adhesive layer (Y) arranged on at least one side of the viscoelastic layer (X). The pressure-sensitive adhesive layer (Y) is derived from an acrylic pressure-sensitive adhesive composition through the application of an active energy ray, and the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier. The acrylic pressure-sensitive adhesive composition preferably contains 0.001 to 5 parts by weight of the photoinitiator (b) and 0.01 to 25 parts by weight of the alkylphenol tackifier (c) per 100 parts by weight of the vinyl monomer mixture or a partial polymer thereof (a).



Printed by Jouve, 75001 PARIS (FR)

## Description

### Technical Field

The present invention relates to an acrylic pressure-sensitive adhesive tape or sheet that shows satisfactory adhesion to hard-to-adhere adherends, and to a method for producing the acrylic pressure-sensitive adhesive tape or sheet.

### Background Art

As exterior cladding or for protection or decoration of automobile bodies, components such as (side) moldings and plates are usually mounted and fixed by a pressure-sensitive adhesive tape or sheet (hereinafter such a "tape or sheet" is also simply referred to as a "tape" or "sheet") having a foam-like or foam base. Pressure-sensitive adhesive for these uses should show satisfactory adhesion to paints (coating materials) and should have good weathering resistance, water resistance, petrol resistance, and durability. To satisfy these requirements, acrylic pressure-sensitive adhesives are used and, among such acrylic pressure-sensitive adhesives, those containing functional groups typified by carboxyl groups for maintaining satisfactory adhesion are generally used.
Acrylic/melamine coatings containing both acrylic moieties and melamine moieties have been used as automotive coatings. Such acrylic/melamine coatings are found to cause a stain by the action of acid rain in recent years, because the triazine ring of melamine is hydrolyzed by the acid rain. Accordingly, automotive paints containing no or a less amount of melamine resin have been developed (acid-rain resistant coatings) (see Patent Document 1). Known acrylic pressure-sensitive adhesive sheets show insufficient adhesion (adhesion) to some of these coatings.
Additionally, most of recent automotive coatings are to be applied to base layers derived from aqueous materials, whereby the types and amounts of surface control agents to be used in such automotive coatings differ from those previously employed. During intensive investigations, the present inventors found that the adhesion failure is caused by bleeding of surface control agents on the surface of coatings. Such surface control agents are formulated into paints in order to prevent repelling of the paints upon application. Exemplary surface control agents include those supplied by Kusumoto Chemicals, Ltd. (see Patent Document 2). Known acrylic pressure-sensitive adhesive sheets do not show sufficient adhesion to some of coatings, due to surface control agents bled on the surface of coatings (see Patent Document 3). Specifically, the bleeding causes a weakly cohesive layer on the surface of coatings, and this layer inhibits the development of adhesion.
As attempts to improve adhesion to such hard-to-adhere coatings, there are known a pressure-sensitive adhesive exhibiting adhesion to coatings formed from acid-rain resistant automotive paints (see Patent Document 4); and an acrylic pressure-sensitive adhesive tape exhibiting adhesion to materials with low surface energy, such as polyolefins and automotive coatings (see Patent Document 5). However, demands have been made on techniques and additives to give further higher adhesion to hard-to-adhere adherends such as acid-rain resistant coatings, and automotive coatings having a layer of surface control agent (film of bled surface control agents) formed through bleeding of surface control agents.
[Patent Document 1] Japanese Unexamined Patent Application Publication (JP-A) No. Hei 06-108001
[Patent Document 2] JP-A No. 2002-66206
[Patent Document 3] JP-A No. 2002-226834
[Patent Document 4] JP-A No. Hei 07-3236
[Patent Document 5] JP-A No. 2002-241709

### Disclosure of Invention

### Problems to be Solved by the Invention

Accordingly an object of the present invention is to provide an acrylic pressure-sensitive adhesive sheet that exhibits satisfactory adhesion to hard-to-adhere adherends.
Another object of the present invention is to provide an acrylic pressure-sensitive adhesive sheet that is usable to hard-to-adhere coatings as adherends.
Yet another object of the present invention is to provide a method for producing an acrylic pressure-sensitive adhesive sheet that exhibits satisfactory adhesion to hard-to-adhere adherends.

Means for Solving the Problems

After intensive investigations to achieve the objects, the present inventors have found that an acrylic pressure-sensitive adhesive sheet exhibits satisfactory adhesion to hard-to-adhere adherends, which acrylic pressure-sensitive adhesive sheet includes a microsphere-containing viscoelastic layer (X); and a pressure-sensitive adhesive layer (Y) arranged on at least one side of the viscoelastic layer (X), in which the pressure-sensitive adhesive layer (Y) is derived from an acrylic pressure-sensitive adhesive composition through the application of an active energy ray, and the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier. The present invention has been made based on these findings.

Specifically, according to the present invention, there is provided an acrylic pressure-sensitive adhesive tape or sheet which includes a microsphere-containing viscoelastic layer (X); and a pressure-sensitive adhesive layer (Y) arranged on at least one side of the viscoelastic layer (X), in which the pressure-sensitive adhesive layer (Y) is derived from an acrylic pressure-sensitive adhesive composition through the application of an active energy ray, and the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier.

The acrylic pressure-sensitive adhesive composition preferably contains 0.001 to 5 parts by weight of the photoinitiator (b) and 0.01 to 25 parts by weight of the alkylphenol tackifier (c) per 100 parts by weight of the vinyl monomer mixture or a partial polymer thereof (a).

The viscoelastic layer (X) preferably contains microspheres and an acrylic base polymer containing an alkyl (meth)acrylate as a main monomer component. The microsphere-containing viscoelastic layer (X) is preferably a layer derived from an acrylic polymerizable composition containing microspheres through the application of an active energy ray, which acrylic polymerizable composition contains microspheres; an alkyl (meth)acrylate as a main monomer component; and a photoinitiator.

The microspheres contained in the viscoelastic layer (X) are preferably hollow glass balloons.

The acrylic pressure-sensitive adhesive tape or sheet is preferably used to coatings (painted films). Among such coatings, the tape or sheet is more preferably used to acid-rain resistant coatings and automotive coatings. The tape or sheet is further preferably used to coatings having such a melamine content that the ratio of a melamine peak to an ester peak is 0.4 or less, in which the melamine peak is a peak derived from stretching vibration of melamine at 814 $cm^{-1}$, and the ester peak is a peak derived from stretching vibration of ester bond at 1730 $cm^{-1}$, both determined through attenuated total reflectance measurement (ATR) using Fourier transform infrared spectroscopy (FT-IR). The tape or sheet is also preferably used to coatings containing surface control agents.

According to the present invention, there is further provided a method for producing the acrylic pressure-sensitive adhesive tape or sheet. The method includes the step of providing a pressure-sensitive adhesive layer (Y) on at least one side of a viscoelastic layer (X) containing microspheres, in which the viscoelastic layer (X) is formed from a polymerizable composition containing microspheres and an alkyl (meth)acrylate as a main monomer component, the pressure-sensitive adhesive layer (Y) is formed from an acrylic pressure-sensitive adhesive composition through the application of an active energy ray, and the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier.

Advantages

Acrylic pressure-sensitive adhesive sheets according to the present invention have the above configurations and thereby exhibit satisfactory adhesion to hard-to-adhere adherends.

Best Modes for Carrying Out the Invention

[Acrylic Pressure-Sensitive Adhesive Sheets]

Acrylic pressure-sensitive adhesive sheets (acrylic self-adhesive sheets) according to the present invention are pressure-sensitive adhesive sheets each including a microsphere-containing viscoelastic layer (X); and a pressure-sensitive adhesive layer (Y) [self-adhesive layer (Y)] arranged on one or both sides of the viscoelastic layer (X), in which the pressure-sensitive adhesive layer (Y) is derived from an acrylic pressure-sensitive adhesive composition through the application of an active energy ray, and the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier. Specifically, the acrylic

pressure-sensitive adhesive sheets are not limited in their shape and other factors, as long as they have a pressure-sensitive adhesive layer (Y) on one or both sides of a microsphere-containing viscoelastic layer (X). The microsphere-containing viscoelastic layer (X) may show pressure-sensitive adhesive properties (adhesion) or not.

These acrylic pressure-sensitive adhesive sheets may be either double-faced pressure-sensitive adhesive sheets (double-faced self-adhesive sheets) having adhesive faces on both sides thereof, or single-faced pressure-sensitive adhesive sheets (single-faced pressure-sensitive adhesive sheets) having an adhesive face only on one side thereof.

More specifically, from the viewpoint of structure, acrylic pressure-sensitive adhesive sheets according to the present invention can be classified, for example, into (1) a double-faced pressure-sensitive adhesive sheet (double-faced self-adhesive sheet) which includes a microsphere-containing viscoelastic layer (X) having adhesiveness (pressure-sensitive adhesive properties), and a pressure-sensitive adhesive layer (Y) arranged on one side of the viscoelastic layer (X); (2) a double-faced pressure-sensitive adhesive sheet which includes a microsphere-containing viscoelastic layer (X), and a pressure-sensitive adhesive layer (Y) arranged on both sides of the microsphere-containing viscoelastic layer (X); (3) a double-faced pressure-sensitive adhesive sheet which includes a microsphere-containing viscoelastic layer (X), a pressure-sensitive adhesive layer (Y) arranged on one side of the microsphere-containing viscoelastic layer (X), and a pressure-sensitive adhesive layer other than the pressure-sensitive adhesive layer (Y) arranged on the other side of the microsphere-containing viscoelastic layer (X); and (4) a single-faced pressure-sensitive adhesive sheet which includes a microsphere-containing viscoelastic layer (X) but having no adhesiveness, and a pressure-sensitive adhesive layer (Y) arranged on one side of the microsphere-containing viscoelastic layer (X).

When an acrylic pressure-sensitive adhesive sheet according to the present invention is a double-faced pressure-sensitive adhesive sheet, two compositions for the formation of layers of two adhesive faces may contain the same or different monomer components.

The other pressure-sensitive adhesive layer than the pressure-sensitive adhesive layer (Y) can be formed, for example, from a known pressure-sensitive adhesive according to a known technique for forming pressure-sensitive adhesive layers. Exemplary known pressure-sensitive adhesives include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. The thickness of the other pressure-sensitive adhesive layer than the pressure-sensitive adhesive layer (Y) is not particularly limited and can be suitably set according typically to the purpose and usage.

Acrylic pressure-sensitive adhesive sheets according to the present invention may further include a release film (separator) in order typically to protect adhesive faces. They may further include any of other layers such as intermediate layers and under coats.

Such intermediate layers may be arranged as one or more intermediate layers typically between a microsphere-containing viscoelastic layer (X) and a pressure-sensitive adhesive layer (Y). Exemplary intermediate layers include a coating layer of release agent to impart releasability; a coating layer of primer to improve adhesion; a layer to impart satisfactory deformability to the sheet; a layer to provide a larger adhesion area to adherends; a layer to provide higher adhesion to adherends; a layer to allow the sheet to satisfactorily follow the surface shape of adherends; a layer to more satisfactorily reduce the adhesion of the sheet as a result of heating; and a layer to allow the sheet to peel off more satisfactorily as a result of heating.

The acrylic pressure-sensitive adhesive sheets according to the present invention may be wound into rolls or may be stacked as sheets. Specifically, the acrylic pressure-sensitive adhesive sheets may each be in the form typically of a sheet or tape. The adhesive face of an acrylic pressure-sensitive adhesive sheet, if wound as a roll, may be protected by a release film (separator) or by a releasably treated layer (backing layer) arranged on a carrier (base) on the opposite side to the adhesive face. Exemplary release agents (parting agents) for the formation of the releasably treated layer (backing layer) on the carrier include silicone release agents and long-chain alkyl release agents.

[Pressure-Sensitive Adhesive Layers (Y)]

The pressure-sensitive adhesive layers (Y) are layers prepared by curing an acrylic pressure-sensitive adhesive composition through the application of an active energy ray, which acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier. This layer is a pressure-sensitive adhesive layer that provides an adhesive face having satisfactory adhesion to hard-to-adhere adherends. Exemplary hard-to-adhere adherends include coatings such as acid-rain resistant coatings, automotive coatings, and layers of surface control agents formed as a result of bleeding of surface control agents (films of bled surface control agents).

The component (a) vinyl monomer mixture or a partial polymer thereof is a monomer mixture mainly containing

an alkyl (meth)acrylate (a1) whose alkyl moiety has 2 to 14 carbon atoms, or a partial polymer of the vinyl monomer mixture. The vinyl monomer mixture may contain, as monomer components, one or more alkyl (meth)acrylates (a1) whose alkyl moiety has 2 to 14 carbon atoms alone, or in combination with one or more monomers (a2) which are copolymerizable with the alkyl (meth)acrylates (a1).

Exemplary alkyl (meth)acrylates (a1) whose alkyl moiety has 2 to 14 carbon atoms include ethyl (meth)acrylates, n-propyl (meth)acrylates, isopropyl (meth)acrylates, n-butyl (meth)acrylates, sec-butyl (meth)acrylates, t-butyl (meth) acrylates, n-octyl (meth)acrylates, isooctyl (meth)acrylates, 2-ethylhexyl (meth)acrylates, isononyl (meth)acrylates, and dodecyl (meth)acrylates. Each of different alkyl (meth)acrylates (a1) whose alkyl moiety has 2 to 14 carbon atoms may be used alone or in combination.

Exemplary copolymerizable monomers (a2) include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylates, 2-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; acid anhydride monomers such as maleic anhydride and itaconic anhydride; sulfonic-containing monomers such as 2-acrylamido-2-methylpropanesulfonic acid and sulfopropyl acrylate; phosphate-containing monomers such as 2-hydroxyethylacryloyl phosphate; amide monomers such as (meth)acrylamide and N-substituted (meth)acrylamides (e.g., N-methylolacrylamide); and succinimide monomers such as N-(meth)acryloyloxymethylenesuccinimides, N-(meth)acryloyl-6-oxyhexamethylenesuccinimides, and N-(meth)acryloyl-8-oxyoctamethylenesuccinimides.

Exemplary copolymerizable monomers (a2) further include vinyl monomers such as vinyl acetate, N-vinylpyrrolidone, N-vinylcarboxamide, styrene, and N-vinylcaprolactam; cyano acrylate monomers such as acrylonitrile and methacrylonitrile; acrylic ester monomers such as glycidyl (meth)acrylates, tetrahydrofurfuryl (meth)acrylates, polyethylene glycol (meth)acrylates, fluorine (meth)acrylates, silicone (meth)acrylates, and 2-methoxyethyl acrylate; alkyl (meth) acrylate having alkyl groups other than those of the alkyl (meth)acrylates (a1) whose alkyl moiety has 2 to 14 carbon atoms, such as methyl (meth)acrylates and octadecyl (meth)acrylates.

Each of different copolymerizable monomers (a2) may be used alone or in combination, if employed. The ratio (percent by weight) of alkyl (meth)acrylates (a1), whose alkyl moiety has 2 to 14 carbon atoms, to the copolymerizable monomers (a2), if used, is from 70:30 to 99.9:0.1, preferably from 80:20 to 99.5:0.5, and more preferably from 90:10 to 99:1 in the component (a) vinyl monomer mixture or a partial polymer thereof.

Of copolymerizable monomers, hydroxyl-containing monomers and carboxyl-containing monomers are preferred, of which acrylic acid is particularly preferred. Typically, the resulting adhesive tape or sheet can show further higher adhesion when the component (a) vinyl monomer mixture or a partial polymer thereof contains acrylic acid as a copolymerizable monomer (a2) in such an amount that the ratio (percent by weight) of the alkyl (meth)acrylates (a1) whose alkyl moiety has 2 to 14 carbon atoms to the copolymerizable monomer (a2) is from 90:10 to 99:1.

The photoinitiators (b) for use herein are not particularly limited and include ketal photoinitiators, α-hydroxyketone photoinitiators, α-aminoketone photoinitiators, acylphosphine oxide photoinitiators, benzophenone photoinitiators, thioxanthone photoinitiators, benzoin ether photoinitiators, acetophenone photoinitiators, aromatic sulfonyl chloride photoinitiators, photo-active oxime photoinitiators, benzoin photoinitiators, and benzil photoinitiators.

More specifically, exemplary ketal photoinitiators include 2,2-dimethoxy-1,2-diphenylethan-1-one (supplied under the trade name "Irgacure 651" by Ciba Specialty Chemicals Corporation). Exemplary α-hydroxyketone photoinitiators include 1-hydroxycyclohexyl phenyl ketone (supplied under the trade name "Irgacure 184" by Ciba Specialty Chemicals Corporation), 2-hydroxy-2-methyl-1-phenyl-propan-1-one (supplied under the trade name "Darocure 1173" by Ciba Specialty Chemicals Corporation), and 1-[4-(2-hydroxyethoxy)-phenyl]-2-hydroxy-2-methyl-1-propan-1-one (supplied under the trade name "Irgacure 2959" by Ciba Specialty Chemicals Corporation). Exemplary α-aminoketone photoinitiators include 2-methyl-1[4-(methylthio)phenyl]-2-morpholinopropan-1-one (supplied under the trade name "Irgacure 907" by Ciba Specialty Chemicals Corporation), and 2-benzyl-2-dimethylamino-1-(4-morpholinophenyl)-butanone-1 (supplied under the trade name "Irgacure 369" by Ciba Specialty Chemicals Corporation). Exemplary acylphosphine oxide photoinitiators include 2,4,6-trimethylbenzoyldiphenylphosphine oxide (supplied under the trade name "Lucirin TPO" by BASF AG). Exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone. Exemplary aromatic sulfonyl chloride photoinitiators include 2-naphthalenesulfonyl chloride. Exemplary photo-active oxime photoinitiators include 1-phenyl-1,1-propanedione-2-(o-ethoxycarbonyl)-oxime. Exemplary benzoin photoinitiators include benzoin. Exemplary benzil photoinitiators include benzil (dibenzoyl). Exemplary benzophenone photoinitiators include benzophenone, benzoylbenzoic acid, 3,3'-dimethyl-4-methoxybenzophenone, polyvinylbenzophenone, and α-hydroxycyclohexyl phenyl ketone. Exemplary ketal photoinitiators include benzyl dimethyl ketal. Exemplary thioxanthone photoinitiators include thioxanthone, 2-chlorothioxanthone, 2-methylthioxanthone, 2,4-dimethylthioxanthane, isopropylthioxanthone, 2,4-dichlorothioxanthone, 2,4-diethylthioxanthone, 2,4-diisopropylthioxanthone, and dodecylthioxanthone.

The amount of photoinitiators (b) is 0.001 to 5 parts by weight, and preferably 0.005 to 3 parts by weight, per 100 parts by weight of total monomer components in the component (a) vinyl monomer mixture or a partial polymer thereof. Each of different photoinitiators (b) may be used alone or in combination.

Alkylphenol tackifiers (c) for use herein may for example be alkylphenol tackifier resins of following Formula (1). These resins have hydroxyl groups in the molecule and are highly compatible (miscible) with acrylic polymers. In following Formula (1), R represents an alkyl group.

[Chemical Formula 1]

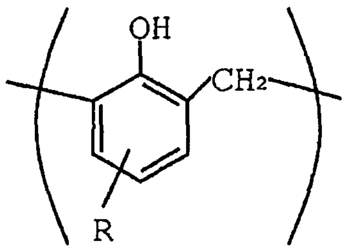

(1)

wherein R represents an alkyl group.

Such alkylphenol tackifiers (c) are phenolic resins prepared through addition condensation of an alkylphenol having an alkyl group on the benzene ring of phenol moiety with formaldehyde in the presence of a catalyst containing an acidic or basic substance. They can be either novolac-type or resol-type phenolic resins.

The alkyl group in the alkylphenol is not particularly limited, but is preferably an alkyl group having 1 to 10 carbon atoms, such as methyl group, ethyl group, propyl group, butyl group, pentyl group, hexyl group, heptyl group, octyl group, nonyl group, or decyl group. Among them, an alkyl group having 4 to 8 carbon atoms, such as butyl group, pentyl group, hexyl group, heptyl group, or octyl group, is more preferred. For its chain structure, the alkyl group may be either linear or branched, but is preferably a tertiary alkyl group. The alkyl group in the alkylphenol may exist either at the meta-position or para-position, but preferably exists at the para-position, provided that the hydroxyl group exists at the 1-position.

Accordingly, of alkylphenols, preferred are alkylphenols each having a tertiary alkyl group with 4 to 8 carbon atoms at the para-position. Examples of such alkylphenols include 4-tert-butylphenol, p-tert-pentylphenol (p-tert-amylphenol), and 4-tert-octylphenol.

Each of different alkylphenols may be used alone or in combination in addition condensation between alkylphenols and formaldehyde. Accordingly, the alkylphenol tackifiers (c) may each structurally includes two or more different alkyl groups.

The alkylphenol tackifiers (c) may also be modified phenolic resins prepared typically from phenolic resins through modification typically with rosin or terpene, which phenolic resins have been obtained as a result of the addition condensation.

Such phenolic resins and modified phenolic resins may be commercially available typically as products supplied as "TACKROL 101," "TACKROL 160," "TACKROL EP-20," and "TACKROL EP-30" by Taoka Chemical Co., Ltd.; as "HITANOL 1501" and "HITANOL 1502" by Hitachi Chemical Co., Ltd.; as "SUMILITERESIN PR 175" and "SUMILITERESIN PR 19900" by Sumitomo Bakelite Co., Ltd.; as "NIKANOL HP-70" by Mitsubishi Gas Chemical Company, Inc.; and as "TAMANOL" by Arakawa Chemical Industries, Ltd.

The amount of alkylphenol tackifiers (c) in the alkyl pressure-sensitive adhesive composition is 0.01 to 25 parts by weight, preferably 0.1 to 20 parts by weight, and more preferably 0.2 to 15 parts by weight, per 100 parts by weight of total monomer components in the component (a) vinyl monomer mixture or a partial polymer thereof. Alkylphenol tackifiers (c), if used in an amount of less than 0.01 part by weight, may not effectively act to improve the adhesion of the sheet. In contrast, alkylphenol tackifiers (c), if used in an amount of more than 25 parts by weight, may inhibit photopolymerization upon application of an active energy ray. In other words, alkylphenol tackifiers (c), if used in an amount of more than 25 parts by weight, may act as photopolymerization inhibitors. Each of different alkylphenol tackifiers (c) may be used alone or in combination in the acrylic pressure-sensitive adhesive composition.

The acrylic pressure-sensitive adhesive sheets shows superior adhesion to coatings having a surface control agent-bled surface as adherends. Although details remaining unknown, this is probably because the tackifier (c) in the pressure-sensitive adhesive layer (Y) forms a specific compatible or miscible state located in the vicinity of the interface

of pressure-sensitive adhesive layer (Y); the bleeding component of the coating is absorbed through the tackifier (c) and diffuses into the pressure-sensitive adhesive layer (Y); this prevents the formation of a weakly cohesive layer of the bleeding component on the surface of coating; whereby the adhesion state exhibited by the pressure-sensitive adhesive layer (Y) can occur and last.

The acrylic pressure-sensitive adhesive composition may further contain one or more multifunctional (meth) acrylates so as to impart a suitable gel fraction to the pressure-sensitive adhesive layer (Y). The multifunctional (meth) acrylates can freely be any of compounds each having at least two (meth)acryloyl groups.

Exemplary multifunctional (meth)acrylates include trimethylolpropane tri(meth)acrylates, pentaerythritol tetra (meth)acrylates, 1,2-ethylene glycol di(meth)acrylates, 1,6-hexanediol di(meth)acrylates, and 1,12-dodecanediol di (meth)acrylates. Each of different multifunctional (meth)acrylates may be used alone or in combination.

The multifunctional (meth)acrylates may be used in such an amount that the resulting pressure-sensitive adhesive layer (Y) formed from the acrylic pressure-sensitive adhesive composition has a gel fraction of 45 percent by weight or more (for example, 45 to 99 percent by weight), and preferably 50 percent by weight (for example, 50 to 97 percent by weight). A pressure-sensitive adhesive layer (Y), if having a gel fraction of less than 45 percent by weight, may show insufficient cohesion and thereby exhibit insufficient holding power and/or longitudinal shear strength. A pressure-sensitive adhesive layer (Y), if having an excessively high gel fraction (of more than 99 percent by weight), may show insufficient tack, and this may adversely affect the adhesiveness and/or appearance of the tape or sheet.

The gel fraction of pressure-sensitive adhesive layer (Y) may be determined in the following manner. About 1 g of the pressure-sensitive adhesive layer (Y) is sampled and precisely weighed, and this weight is defined as the weight of pressure-sensitive adhesive layer (Y) before immersion. Next, the sample is immersed in about 40 g of ethyl acetate for 7 days, all portions insoluble in ethyl acetate are recovered, dried at 130°C for 2 hours, and the dry weight of insoluble portions is determined. These measured weights are substituted in the following equation to calculate the gel fraction:

Gel fraction (%) of pressure-sensitive adhesive layer (Y) = [(Dry weight of insoluble portions)/(Weight of pressure-sensitive adhesive layer (Y) before immersion)] x 100

The amount of multifunctional (meth)acrylates to be used is such an amount that the pressure-sensitive adhesive layer (Y) has a gel fraction within the above range. More specifically, while varying according typically to the molecular weight and number of functional groups thereof, the amount of multifunctional (meth)acrylates is generally 0.001 to 30 parts by weight, and preferably 0.05 to 20 parts by weight, per 100 parts by weight of (a) the vinyl monomer mixture or a partial polymer thereof contained in the acrylic pressure-sensitive adhesive composition.

For better handleability, the acrylic pressure-sensitive adhesive composition preferably has a viscosity adjusted to be suitable for application. Specifically, the acrylic pressure-sensitive adhesive composition preferably has a viscosity of 0.3 to 40 Pa.s as measured at a temperature of 25°C with a Brookfield type viscometer. For the viscosity adjustment, the vinyl monomer mixture in the acrylic pressure-sensitive adhesive composition may be converted into a partial polymer thereof through prepolymerization. Namely, the acrylic pressure-sensitive adhesive composition may contain a partial polymer of the vinyl monomer mixture.

The conversion (rate of polymerization) of partial polymer of the vinyl monomer mixture is about 2 to 40 percent by weight, and preferably 5 to 20 percent by weight, while it may vary depending on the molecular weight of a partially polymerized moiety. The partial polymerization is generally conducted through the application of an active energy ray while avoiding contact with oxygen. Of such active energy rays, ultraviolet rays are preferably employed.

The conversion of partial polymer herein is determined in the following manner. About 0.5 g of the partial polymer is sampled, precisely weighed, dried at 130°C for 2 hours, the dried sample is precisely weighed, whereby a weight loss [corresponding to a volatile component (weight of unreacted monomers)] is determined, and the determined weight loss is substituted in the following equation:

Conversion (%) of partial polymer = [1-(Weight loss)/(Weight of partial polymer before drying)] x 100

The viscosity of the acrylic pressure-sensitive adhesive composition may also be adjusted by adequately incorporating one or more thickening polymers thereinto. Exemplary thickening polymers include copolymers of the alkyl (meth)acrylate (a1) with a comonomer such as acrylic acid, acrylamide, acrylonitrile, or acryloylmorpholine; styrene-butadiene rubbers (SBRs); isoprene rubbers; styrene-butadiene block copolymers (SBSs); ethylene-vinyl acetate copolymers; acrylic rubbers; polyurethanes; and polyesters.

The amount of thickening polymers, if used, is 40 percent by weight or less (for example, 5 to 40 percent by weight) in the acrylic pressure-sensitive adhesive composition. Each of different thickening polymers may be used alone or in combination.

The acrylic pressure-sensitive adhesive composition may further contain various additives within ranges not adversely affecting photopolymerization ability. Exemplary additives include known or common additives such as plasticizers, softeners, fillers, pigments, and dyestuffs.

The pressure-sensitive adhesive layer (Y) and other pressure-sensitive adhesive layers than the pressure-sensitive adhesive layer (Y), if employed, may each further contain bubbles (may be cellulated or foamed). Specifically, the pressure-sensitive adhesive layer (Y) and other pressure-sensitive adhesive layers than the pressure-sensitive adhesive layer (Y), if employed, may each be a pressure-sensitive adhesive layer containing bubbles (hereinafter also referred to as a "cellular pressure-sensitive adhesive layer" or "cellular self-adhesive layer") or a pressure-sensitive adhesive layer containing no bubbles (hereinafter also referred to as a "non-cellular pressure-sensitive adhesive layer" or "non-cellular self-adhesive layer"). By way of example, when the acrylic pressure-sensitive adhesive sheet according to the present invention is a pressure-sensitive adhesive sheet including a microsphere-containing viscoelastic layer (X) and, arranged on one side thereof, a pressure-sensitive adhesive layer, the pressure-sensitive adhesive sheet may be any of one including the microsphere-containing viscoelastic layer (X) and, arranged on one side thereof, a cellular pressure-sensitive adhesive layer; or one including the microsphere-containing viscoelastic layer (X) and, arranged on one side thereof, a non-cellular pressure-sensitive adhesive layer. When the acrylic pressure-sensitive adhesive sheet is a pressure-sensitive adhesive sheet including a microsphere-containing viscoelastic layer (X) and, arranged on both sides thereof, pressure-sensitive adhesive layers, the pressure-sensitive adhesive sheet may be any of one including the microsphere-containing viscoelastic layer (X) and, arranged on both sides thereof, cellular pressure-sensitive adhesive layers; one including the microsphere-containing viscoelastic layer (X), a cellular pressure-sensitive adhesive layer arranged on one side of the viscoelastic layer (X), and a non-cellular pressure-sensitive adhesive layer arranged on the other side; and one including the microsphere-containing viscoelastic layer (X) and, arranged on both sides thereof, non-cellular pressure-sensitive adhesive layers.

The way to incorporate bubbles into the pressure-sensitive adhesive layer (Y) is not particularly limited. Typically, bubbles may be contained in the pressure-sensitive adhesive layer (Y) by (1) a process of preparing an acrylic pressure-sensitive adhesive composition further containing a gas component that constitute bubbles (hereinafter also referred to as a "bubble-constituting gas"), including an inert gas such as nitrogen, carbon dioxide, or argon, or air (the resulting composition is hereinafter also referred to "cellular acrylic pressure-sensitive adhesive composition"), and forming a pressure-sensitive adhesive layer (Y) using the cellular acrylic pressure-sensitive adhesive composition; or by (2) a process of forming the pressure-sensitive adhesive layer (Y) from an acrylic pressure-sensitive adhesive composition further containing a blowing agent (foaming agent). The pressure-sensitive adhesive layer (Y) is allowed to contain bubbles preferably by the process (1). The blowing agent for use herein is not particularly limited, and can be suitably selected typically from known blowing agents such as heat-expandable microspheres.

The way to form the pressure-sensitive adhesive layer (Y) is not limited. The layer (Y) may be formed, for example, by a process of applying an acrylic pressure-sensitive adhesive composition to a suitable backing or carrier such as a release film or base, to give a layer of acrylic pressure-sensitive adhesive composition, and curing the layer with an active energy ray. Of such active energy rays, ultraviolet rays are preferably employed. This process may further include the step of drying if necessary. Since such photo-polymerization is inhibited by oxygen in the atmosphere, the curing with an active energy ray (photo-curing) is preferably carried out in the absence of oxygen by carrying out photo-curing after protecting the layer of acrylic pressure-sensitive adhesive composition typically with a release film (separator) laminated thereon or by carrying out photo-curing in a nitrogen atmosphere. The release film (separator), for example, for use in the formation of pressure-sensitive adhesive layer (Y) may be removed (peeled off) at an appropriate time during the production of the acrylic pressure-sensitive adhesive sheet or may be removed upon use of the produced acrylic pressure-sensitive adhesive sheet.

Exemplary active energy rays include ionizing radiation such as alpha rays, beta rays, gamma rays, neutron beams, and electron beams; and ultraviolet rays. Among them, ultraviolet rays are preferably employed. The radiation dose and application duration of active energy ray are not particularly limited, as long as the photoinitiator is activated to cause reaction of monomer components. Typically, the application of active energy ray may be carried out by applying an ultraviolet ray at a radiation dose of about 400 to 4000 $mJ/cm^2$, which ultraviolet ray gives an irradiance of 1 to 200 $mW/cm^2$ at a wavelength of 300 to 400 nm.

The application of an active energy ray to the acrylic pressure-sensitive adhesive composition to form a pressure-sensitive adhesive layer (Y) is preferably conducted so that the resulting pressure-sensitive adhesive layer (Y) has a conversion of 90 percent by weight or more. Residual unreacted monomers can also be removed through a usual drying process. The conversion of the pressure-sensitive adhesive layer (Y) can be determined in the same way as in the conversion of the partial polymer.

The thickness of the pressure-sensitive adhesive layer (Y) can be suitably set according to necessity and is, for example, about 10 to 400 μm, preferably about 20 to 350 μm, and more preferably about 30 to 300 μm for ensuring satisfactory bond strength. The pressure-sensitive adhesive layer (Y) may have a single-layer structure or a multilayer structure.

[Microsphere-Containing Viscoelastic Layer (X)]

The microsphere-containing viscoelastic layer (X) is not particularly limited, as long as it contains microspheres and has viscoelastic properties, but it generally contains microspheres and a base polymer constituting a viscoelastic body. Accordingly, the microsphere-containing viscoelastic layer (X) is generally formed through the polymerization of a composition containing at least microspheres and one or more monomer components to constitute the base polymer (hereinafter also referred to as a "microsphere-containing polymerizable composition"). The base polymer of microsphere-containing viscoelastic layer (X) may be the same as or different from that of the pressure-sensitive adhesive layer (Y).

The base polymer is not particularly limited and can be suitably selected from among known base polymers. Exemplary usable base polymers include acrylic polymers, rubber polymers, vinyl alkyl ether polymers, silicone polymers, polyesters, polyamides, urethane polymers, fluorocarbon polymers, and epoxy polymers. Of these base polymers, acrylic polymers are preferably used herein for better adhesion to the pressure-sensitive adhesive layer (Y). The microsphere-containing viscoelastic layer (X) is therefore preferably formed through the polymerization of a microsphere-containing acrylic polymerizable composition that contains at least microspheres and a monomer component for constituting an acrylic polymer (acrylic monomer) as a main monomer component. The microsphere-containing viscoelastic layer (X) may contain each of different base polymers alone or in combination.

The acrylic polymer is a polymer of one or more alkyl (meth)acrylates as main monomer components. Exemplary alkyl (meth)acrylates for use as main monomer components in the acrylic polymer include alkyl (meth)acrylates whose alkyl moiety has 1 to 20 carbon atoms, such as methyl (meth)acrylates, ethyl (meth)acrylates, n-propyl (meth)acrylates, isopropyl (meth)acrylates, n-butyl (meth)acrylates, isobutyl (meth)acrylates, sec-butyl (meth)acrylates, t-butyl (meth)acrylates, pentyl (meth)acrylates, isopentyl (meth)acrylates, hexyl (meth)acrylates, heptyl (meth)acrylates, n-octyl (meth)acrylates, isooctyl (meth)acrylates, 2-ethylhexyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth)acrylates, pentadecyl (meth)acrylates, hexadecyl (meth)acrylates, heptadecyl (meth)acrylates, octadecyl (meth)acrylates, nonadecyl (meth)acrylates, and icosyl (meth)acrylates. Among them, alkyl (meth)acrylate whose alkyl moiety has 2 to 14 carbon atoms are preferred, and alkyl (meth)acrylates whose alkyl moiety has 2 to 10 carbon atoms are more preferred. Each of different alkyl (meth)acrylates may be used alone or in combination.

The acrylic polymer may further contain other (meth)acrylates, in addition to alkyl (meth)acrylates. Exemplary other (meth)acrylates include (meth)acrylates each having an alicyclic hydrocarbon group, such as cyclopentyl (meth)acrylates, cyclohexyl (meth)acrylates, and isobornyl (meth)acrylates.

The content of alkyl (meth)acrylates, which work as main monomer components in the acrylic polymer, is preferably 60 percent by weight or more, and more preferably 80 percent by weight or more, based on the total amount of monomer components constituting the acrylic polymer.

The acrylic polymer may further contain, as monomer components, various copolymerizable monomers such as polar-group-containing monomers and multifunctional monomers. Use of copolymerizable monomers as monomer components enables the microsphere-containing viscoelastic layer (X) to be improved in properties such as elasticity and flexibility. Each of different copolymerizable monomers may be used alone or in combination.

Exemplary polar-group-containing monomers include carboxyl-containing monomers such as acrylic acid, methacrylic acid, carboxyethyl (meth)acrylates, carboxypentyl (meth)acrylates, itaconic acid, maleic acid, fumaric acid, crotonic acid, and isocrotonic acid, and anhydrides of them, such as maleic anhydride; hydroxyl-containing monomers such as 2-hydroxyethyl (meth)acrylates, 3-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; sulfonic-containing monomers such as 2-acrylamido-2-methylpropanesulfonic acid and sulfopropyl acrylate; phosphate-containing monomers such as 2-hydroxyethylacryloyl phosphate; amido-containing monomers such as (meth)acrylamides, N,N-dimethyl(meth)acrylamides, N-methylol(meth)acrylamides, N-methoxymethyl(meth)acrylamides, and N-butoxymethyl(meth)acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyano acrylate monomers such as acrylonitrile and methacrylonitrile; and heterocycle-containing vinyl monomers such as N-vinyl-2-pyrrolidone,

(meth)acryloylmorpholine, N-vinylpyridine, N-vinylpiperidone, N-vinylpyrimidine, N-vinylpiperazine, N-vinylpyrazine, N-vinylpyrrole, N-vinylimidazole, and N-vinyloxazole. Of polar-group-containing monomers, preferred are carboxyl-containing monomers such as acrylic acid and methacrylic acid, and anhydrides of them. Each of different polar-group-containing monomers may be used alone or in combination.

The amount of polar-group-containing monomers is 30 percent by weight or less (for example, 1 to 30 percent by weight), and preferably 3 to 20 percent by weight, based on the total amount of monomer components constituting the acrylic polymer. Polar-group-containing monomers, if used in an amount of more than 30 percent by weight, may for example adversely affect the flexibility of the microsphere-containing viscoelastic layer (X), and the resulting pressure-sensitive adhesive sheet may be difficult to adhere satisfactorily to adherends having uneven surfaces. In contrast, polar-group-containing monomers, if used in an excessively small amount (for example, in an amount of less than 1 percent by weight based on the total amount of monomer components for the preparation of acrylic polymer), may adversely affect the cohesion of the microsphere-containing viscoelastic layer (X), and the resulting pressure-sensitive adhesive sheet may show insufficient holding properties and may not be worked satisfactorily upon working such as cutting or punching.

Exemplary multifunctional monomers include hexanediol (meth)acrylates, polyethylene glycol di(meth)acrylates, polypropylene glycol di(meth)acrylates, neopentyl glycol di(meth)acrylates, pentaerythritol di(meth)acrylates, pentaerythritol tri(meth)acrylates, dipentaerythritol hexa(meth)acrylates, trimethylolpropane tri(meth)acrylates, tetramethylolmethane tri(meth)acrylates, allyl (meth)acrylates, vinyl (meth)acrylates, divinylbenzene, epoxy acrylates, polyester acrylates, urethane acrylates, dibutyl (meth)acrylates, and hexydyl (meth)acrylates.

The amount of multifunctional monomers, if used, is 2 percent by weight or less (for example, 0.01 to 2 percent by weight), and preferably 0.02 to 1 percent by weight, based on the total amount of monomer components constituting the acrylic polymer. Multifunctional monomers, if used in an amount of more than 2 percent by weight, may for example adversely affect the flexibility of the microsphere-containing viscoelastic layer (X), and the resulting pressure-sensitive adhesive sheet may be difficult to adhere satisfactorily to adherends having uneven surfaces. In contrast, multifunctional monomers, if used in an excessively small amount (for example, in an amount of less than 0.01 percent by weight based on the total amount of monomer components for the preparation of acrylic polymer), may adversely affect the cohesion of the microsphere-containing viscoelastic layer (X), and the resulting pressure-sensitive adhesive sheet may show insufficient holding properties and may not be worked satisfactorily upon working such as cutting or punching.

Exemplary copolymerizable monomers, other than polar-group-containing monomers and multifunctional monomers, include vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; vinyl chloride; alkoxyalkyl (meth)acrylate monomers such as methoxyethyl (meth)acrylates and ethoxyethyl (meth)acrylates; sulfonic-containing monomers such as sodium vinylsulfonate; phosphate-containing monomers such as 2-hydroxyethylacryloyl phosphate; imido-containing monomers such as cyclohexylmaleimide and isopropylmaleimide; isocyanato-containing monomers such as 2-methacryloyloxyethyl isocyanate; fluorine-containing (meth)acrylates; and silicon-containing (meth)acrylates.

The microspheres are one of components constituting the microsphere-containing viscoelastic layer (X). The presence of microspheres in the viscoelastic layer (X) allows the acrylic pressure-sensitive adhesive sheet, for example, to have higher longitudinal shear strength (adhesion under shear) and to be worked more satisfactorily (with better workability). Each of different types of microspheres may be used alone or in combination.

The microspheres are not particularly limited, as long as being fine particles having spheroidal or spherical shapes. Exemplary microspheres include particles of metals such as copper, nickel, aluminum, chromium, iron, and stainless steels, and of oxides of these metals; particles of carbides such as silicon carbide, boron carbide, and nitrogen carbide; particles of nitrides such as aluminum nitride, silicon nitride, and boron nitride; particles of ceramics represented by oxides such as alumina and zirconium; fine particles of inorganic materials such as calcium carbide, aluminum hydroxide, glass, and silica; particles of naturally-occurring materials, such as shirasu (a kind of volcanic debris) and sand; and particles of polymers such as polystyrenes, poly(methyl methacrylate)s, phenolic resins, benzoguanamine resins, urea resins, silicone resins, nylons, polyesters, polyurethanes, polyethylenes, polypropylenes, polyamides, and polyimides.

Hollow microspheres and solid microspheres may be used as the microspheres respectively. Specifically, exemplary hollow inorganic microspheres include hollow balloons made of glass, such as hollow glass balloons; hollow balloons made of metallic compounds, such as hollow alumina balloons; and hollow balloons made of ceramics, such as hollow ceramic balloons. Exemplary hollow organic microspheres include hollow balloons made from resins, such as hollow acrylic balloons and hollow vinylidene chloride balloons.

Exemplary commercially available hollow glass balloons include a product supplied under the trade name "Glass Microballoon" by Fuji Silysia Chemical Ltd.; products supplied under the trade names "CEL-STAR Z-25," "CEL-STAR Z-27," "CEL-STAR CZ-31T," "CEL-STAR Z-36," "CEL-STAR Z-39," "CEL-STAR T-36," "CEL-STAR SX-39," and "CEL-STAR PZ-6000" by Tokai Kogyo Co., Ltd.; and a product supplied under the trade name "Silax Fine Balloon" by

Fine Balloon Limited-liability Company.

Exemplary commercially available solid glass balloons include a product supplied under the trade name "SUNSPHERE NP-100" (by Asahi Glass Co., Ltd.); and a product supplied under the trade name "Micro Glass Bead EMB-20" and "Glass Bead EGB-210" (by Potters-Ballotini Co., Ltd.).

Of these microspheres, hollow inorganic microspheres are preferably used, of which hollow glass balloons are more preferably used, from the viewpoints typically of weight and efficiency in polymerization by the application of active energy rays (particularly by the application of ultraviolet rays). Hollow glass balloons, if used, help to improve adhesion at high temperatures, without adversely affecting the other properties such as shear strength and holding power.

The particle diameter (average particle diameter) of microspheres is not particularly limited and can be selected within ranges of, for example, from 1 to 500 $\mu$m, preferably from 5 to 200 $\mu$m, and more preferably from 10 to 100 $\mu$m.

The specific gravity of microspheres is not particularly limited and can be selected within ranges of, for example, from 0.1 to 0.8 g/cm$^3$, and preferably from 0.12 to 0.5 g/cm$^3$. Microspheres, if having a specific gravity of less than 0.1 g/cm$^3$ and when being mixed with a polymerizable composition to give a microsphere-containing polymerizable composition, may be difficult to uniformly disperse in the polymerizable composition, because such microspheres tend to float upon the composition. In contrast, microspheres, if having a specific gravity of more than 0.8 g/cm$^3$, may be expensive and may increase the production cost.

The amount of microspheres is not particularly limited and can be selected within such ranges that microspheres occupy, for example, 5 to 50 percent by volume, preferably 10 to 45 percent by volume, and more preferably 15 to 40 percent by volume of the total volume of the microsphere-containing viscoelastic layer (X) formed from the microsphere-containing polymerizable composition. Microspheres, if occupying less than 5 percent by volume of the total volume of the viscoelastic layer (X), may not sufficiently exhibit their advantages. In contrast, microspheres, if occupying more than 50 percent by volume of the viscoelastic layer (X), may cause insufficient adhesion (tackiness) of the microsphere-containing viscoelastic layer (X) prepared from the microsphere-containing polymerizable composition.

The base polymer (particularly an acrylic polymer) of the microsphere-containing viscoelastic layer (X) may be prepared according to a known polymerization process such as solution polymerization, emulsion polymerization, or bulk polymerization (mass polymerization), but it is preferably prepared according to a polymerization process through curing by the action of heat or active energy rays using a polymerization initiator. Specifically, the microsphere-containing viscoelastic layer (X) is preferably a layer prepared by curing a microsphere-containing polymerizable composition (particularly preferably a microsphere-containing acrylic polymerizable composition) containing a polymerization initiator of every kind (such as a thermal polymerization initiator or photoinitiator) through the application of heat or an active energy ray.

The preparation of the microsphere-containing viscoelastic layer (X), if using a microsphere-containing polymerizable composition containing a polymerization initiator such as a thermal polymerization initiator or photoinitiator, can utilize a curing reaction by the action of heat or an active energy ray. This enables the formation of microsphere-containing viscoelastic layer (X) by curing the microsphere-containing polymerizable composition under such a condition that the microspheres are still contained in the composition. Specifically, a microsphere-containing viscoelastic layer (X), in which microspheres are stably contained, can be easily obtained. Herein, each of different polymerization initiators may be used alone or in combination.

The microsphere-containing polymerizable composition may contain polymerization initiators of every kind (such as thermal polymerization initiators and photoinitiators) without limitation. In a preferred embodiment, the composition contains one or more photoinitiators so that polymerization can be conducted within a shorter period of time. Accordingly, in a more preferred embodiment, a microsphere-containing viscoelastic layer (X), in which microspheres are stably contained, is prepared using a polymerization reaction (photo-curing reaction) by the action of an active energy ray. In other words, the microsphere-containing viscoelastic layer (X) is more preferably a layer prepared from an acrylic polymerizable composition containing microspheres, one or more alkyl (meth)acrylates as main monomer components, and one or more photoinitiators through the application of an active energy ray.

A microsphere-containing polymerizable composition, if containing a photoinitiator as above, can be cured by the application of an active energy ray. This enables the formation of the microsphere-containing viscoelastic layer (X) simultaneously with the formation of the pressure-sensitive adhesive layer (Y) during the preparation of the acrylic pressure-sensitive adhesive sheet.

The photoinitiators herein are not particularly limited and can for example be any of the photoinitiators listed as the above-mentioned photoinitiator (b). The amount of photoinitiators is not particularly limited and may be, for example, 0.01 to 5 parts by weight, and preferably 0.05 to 3 parts by weight, per 100 parts by weight of the total monomer components contained in the microsphere-containing polymerizable composition.

It is important to apply an active energy ray to the microsphere-containing polymerizable composition for activating the photoinitiators. Exemplary active energy rays include ionizing radiations such as alpha rays, beta rays, gamma rays, neutron beams, and electron beams; and ultraviolet rays. Among them, ultraviolet rays are preferably used. The radiation dose and application duration of active energy ray are not particularly limited, as long as the photoinitiators are

activated to cause reaction of monomer components.

Exemplary thermal polymerization initiators for use in the microsphere-containing polymerizable composition include azo thermal polymerization initiators such as 2,2'-azobisisobutyronitrile, 2,2'-azobis-2-methylbutyronitrile, dimethyl-2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermal polymerization initiators such as dibenzoyl peroxide and tert-butyl permaleate; and redox thermal polymerization initiators. The amount of thermal polymerization initiators is not particularly limited, as long as being within ranges usable as thermal polymerization initiators.

The microsphere-containing viscoelastic layer (X) in the acrylic pressure-sensitive adhesive sheet may further contain bubbles (foams), in addition to the above-mentioned components such as microspheres. A microsphere-containing viscoelastic layer (X), when further containing bubbles, can advantageously show higher cushioning properties and higher adhesion.

The way to incorporate bubbles into the microsphere-containing viscoelastic layer (X) is not particularly limited. Typically, bubbles may be contained in the viscoelastic layer (X) by (1) a process of preparing a microsphere-containing polymerizable composition further containing a gas component that constitutes bubbles (hereinafter also referred to as a "bubble-constituting gas") (the resulting composition is hereinafter also referred to as a "microsphere-containing cellular polymerizable composition") and forming a microsphere-containing viscoelastic layer (X) by using the microsphere-containing cellular polymerizable composition; or by (2) a process of forming a microsphere-containing viscoelastic layer (X) using a microsphere-containing polymerizable composition further containing a blowing agent (foaming agent). Such a microsphere-containing viscoelastic layer (X) further containing bubbles (hereinafter also referred to as a "microsphere-containing cellular viscoelastic layer (X)") is preferably allowed to contain bubbles by the process (1). The blowing agent used herein is not particularly limited and can be selected typically from among known blowing agents such as heat-expandable microspheres.

The amount of bubbles to be contained in the microsphere-containing viscoelastic layer (X) can be suitably set within ranges not adversely affecting characteristic properties such as elasticity and flexibility, and may be, for example, 5 to 50 percent by volume, preferably 10 to 40 percent by volume, and more preferably 12 to 30 percent by volume, based on the total volume of microsphere-containing viscoelastic layer (X). Bubbles, if contained in an amount of less than 5 percent by volume, may not sufficiently contribute to stress relaxation, and the resulting tape or sheet may often show insufficient resistance to resilience. Bubbles, if contained in an amount of more than 50 percent by volume, may cause open cells penetrating through the microsphere-containing viscoelastic layer (X), and this may deteriorate adhesion properties and appearance of the tape or sheet. In addition, the microsphere-containing viscoelastic layer (X) may be excessively flexible so as to suffer from insufficient shear strength.

Bubbles to be contained in the microsphere-containing viscoelastic layer (X) are basically preferably closed cells, but they may be a mixture of closed cells and semi-closed cells.

Such bubbles or cells generally have spherical shapes, but they may have deformed spherical shapes. The average cell size (diameter) of bubbles is not particularly limited and can be selected within ranges of typically from 1 to 1000 $\mu$m, preferably from 10 to 500 $\mu$m, and more preferably from 30 to 300 $\mu$m.

A bubble component (cellulating component) (gas component constituting bubbles; "bubble-constituting gas") in the bubbles is not particularly limited and can be any gaseous component including inert gas such as nitrogen, carbon dioxide, or argon, or air. When a reaction such as polymerization is conducted after adding a bubble-constituting gas into the composition, it is important that the bubble-constituting gas to be used should be one not adversely affecting the reaction. Of such bubble-constituting gases, nitrogen gas is preferred, from the viewpoints that it does not adversely affect the reaction and is available inexpensively.

The microsphere-containing viscoelastic layer (X) in the acrylic pressure-sensitive adhesive sheet preferably further contains one or more fluorine surfactants, in addition to the microspheres and polymer components constituting a viscoelastic body. Use of such surfactants having specific intramolecular structures helps to reduce the adhesion and frictional drag between the microspheres and polymer in the viscoelastic layer (X) so that stress can satisfactorily disperse. This allows the microsphere-containing viscoelastic composition to have high cohesive strength and to follow uneven surfaces satisfactorily, to thereby give a microsphere-containing viscoelastic layer (X) that is superior in bond strength and shear strength with good balance.

Exemplary fluorine surfactants usable herein include fluorine surfactants each having an oxy-($C_2$-$C_3$) alkylene group and a fluorinated hydrocarbon group per molecule. The oxy-($C_2$-$C_3$) alkylene group is represented by the formula: - R-O- (wherein R represents a linear or branched alkylene group having 2 or 3 carbon atoms). The presence of an oxy-($C_2$-$C_3$) alkylene group in the molecule reduces adhesion and frictional drag between the microspheres and base polymer, and this allows the stress to disperse satisfactorily. Accordingly, a microsphere-containing viscoelastic layer (X), if formed from a microsphere-containing polymerizable composition containing one or more fluorine surfactants, can show higher adhesive strength. Additionally, the presence of fluorinated hydrocarbon group helps the layer to contain

bubbles stably therein, in addition to the above advantages such as reduction in frictional drag. Fluorine surfactants to be used are not particularly limited, as long as having an oxy-($C_2$-$C_3$) alkylene group and a fluorinated hydrocarbon group per molecule. Of such fluorine surfactants, nonionic surfactants are preferred, because they can satisfactorily disperse in the base polymer. The fluorine surfactants may each contain one or more types of oxy-($C_2$-$C_3$) alkylene groups such as oxyethylene group ($-CH_2CH_2O-$) and oxypropylene group [$-CH_2CH(CH_3)O-$] per molecule. Each of different fluorine surfactants may be used alone or in combination.

The fluorinated hydrocarbon group is not particularly limited, but is preferably a perfluoro group. The perfluoro group may be monovalent or multivalent (bivalent or higher). The fluorinated hydrocarbon group may have a double bond and/or triple bond and may have any of linear, branched, and cyclic structures. The number of carbon atoms of the fluorinated hydrocarbon group is not particularly limited and is 1 or more, preferably 3 to 30, and more preferably 4 to 20. The fluorine surfactant has one or more different fluorinated hydrocarbon groups per molecule. The oxy-($C_2$-$C_3$) alkylene group may exist in any form such as an alcohol in which the terminal oxygen atom is bonded to hydrogen atom; an ether in which the terminal oxygen is bonded to another hydrocarbon group; and an ester in which the terminal oxygen atom is bonded via carbonyl group to another hydrocarbon group. The oxy-($C_2$-$C_3$) alkylene structure may also exist as part of a cyclic structure such as a cyclic ether or lactone.

The structure of fluorine surfactant is not particularly limited. In a preferred embodiment, the fluorine surfactants are, for example, copolymers containing, as monomer components, a monomer having an oxy-($C_2$-$C_3$) alkylene group with a monomer having a fluorinated hydrocarbon group. These copolymers can have a variety of structures such as block copolymers and graft copolymers, any of which can be used suitably.

Exemplary block copolymers (copolymers having an oxy-($C_2$-$C_3$) alkylene group and a fluorinated hydrocarbon group in principal chain) include polyoxyethylene perfluoroalkyl ethers, perfluoroalkylated polyoxyethylenes, polyoxypropylene perfluoroalkyl ethers, polyoxyisopropylene perfluoroalkyl ethers, perfluoroalkylated polyoxyethylene sorbitans, perfluoroalkylated polyoxyethylene polyoxypropylene block copolymers, and perfluoroalkylated polyoxyethylene glycols.

Of graft copolymers (copolymers having an oxy-($C_2$-$C_3$) alkylene group and a fluorinated hydrocarbon group in side chain), preferred are copolymers containing, as monomer components, at least a vinyl compound having a polyoxyalkylene group with a vinyl compound having a fluorinated hydrocarbon group, of which acrylic copolymers are more preferred. Exemplary vinyl compounds each having a polyoxyalkylene group include polyoxyalkylene (meth)acrylates such as polyoxyethylene (meth)acrylates, polyoxypropylene (meth)acrylates, and polyoxyethylene polyoxypropylene (meth)acrylates. Exemplary vinyl compounds having a fluorinated hydrocarbon group include (meth)acrylic acid esters containing a fluorinated hydrocarbon, including perfluoroalkyl (meth)acrylates such as perfluorobutyl (meth)acrylates, perfluoroisobutyl (meth)acrylates, and perfluoropentyl (meth)acrylates.

The fluorine surfactants may further contain another structure than the above structure, such as an alicyclic hydrocarbon group and an aromatic hydrocarbon group. It may also contain a variety of functional groups such as carboxyl group, sulfonic group, cyano group, amido group, and amino group, within ranges not impeding dispersibility in the base polymer. Typically, a fluorine surfactant, if being a vinyl copolymer, may contain, as monomer components, one or more monomer components copolymerizable with the vinyl compound having a polyoxyalkylene group and the vinyl compound having a fluorinated hydrocarbon group. Each of different copolymerizable monomers may be used alone or in combination.

Exemplary preferred copolymerizable monomer components include (meth)acrylic acid ($C_1$-$C_{20}$) alkyl esters such as undecyl (meth)acrylates and dodecyl (meth)acrylates; (meth)acrylic acid esters having an alicyclic hydrocarbon group, such as cyclopentyl (meth)acrylates; and (meth)acrylic acid esters having an aromatic hydrocarbon group, such as phenyl (meth)acrylates. Exemplary copolymerizable monomer components further include carboxyl-containing monomers such as maleic acid and crotonic acid; sulfonic-containing monomers such as sodium vinylsulfonate; aromatic vinyl compounds such as styrene and vinyltoluene; olefins or dienes, such as ethylene and butadiene; vinyl ethers such as vinyl alkyl ethers; amido-containing monomers such as acrylamide; amino-containing monomers such as (meth) acryloylmorpholine; glycidyl-containing monomers such as glycidyl methyl (meth)acrylates; and isocyanato-containing monomers such as 2-methacryloyloxyethyl isocyanate. Exemplary usable copolymerizable monomers further include multifunctional copolymerizable monomers (multifunctional monomers) such as dipentaerythritol hexa(meth)acrylates and divinylbenzene.

The fluorine surfactant can have any molecular weight not particularly limited. In a preferred embodiment, the fluorine surfactant is one having a weight-average molecular weight of less than 20000 (for example, 500 or more and less than 20000) for highly effectively reducing the adhesion and frictional drag between the base polymer and microspheres. In a more preferred embodiment, such a fluorine surfactant having a weight-average molecular weight of less than 20000 is used in combination with another fluorine surfactant having a weight-average molecular weight of 20000 or more (for example, 20000 to 100000, preferably 22000 to 80000, and more preferably 24000 to 60000), whereby the bubbles are contained more satisfactorily and more stably in the composition and in the resulting layer.

Exemplary fluorine surfactants containing an oxy-($C_2$-$C_3$) alkylene group and a fluorinated hydrocarbon group and having a weight-average molecular weight of less than 20000 include a product supplied under the trade name

"FTERGENT 251" by NEOS Co., Ltd.; a product supplied under the trade name "FTX-218" by NEOS Co., Ltd.; a product supplied under the trade name "Megafac F-477" by Dainippon Ink and Chemicals, Inc.; a product supplied under the trade name "Megafac F-470" by Dainippon Ink and Chemicals, Inc.; a product supplied under the trade name "Surflon S-381" by AGC Seimi Chemical Co., Ltd.; a product supplied under the trade name "Surflon S-383" by AGC Seimi Chemical Co., Ltd.; a product supplied under the trade name "Surflon S-393" by AGC Seimi Chemical Co., Ltd.; a product supplied under the trade name "Surflon KH-20" by AGC Seimi Chemical Co., Ltd.; and a product supplied under the trade name "Surflon KH-40" by AGC Seimi Chemical Co., Ltd. Exemplary fluorine surfactants containing an oxy-($C_2$-$C_3$) alkylene group and a fluorinated hydrocarbon group and having a weight-average molecular weight of 20000 or more include a product supplied under the trade name "EFTOP EF-352" by JEMCO Inc.; a product supplied under the trade name "EFTOP EF-801" by JEMCO Inc.; and a product supplied under the trade name "Unidyne TG-656" by Daikin Industries, Ltd. Any of these can be suitably used herein.

The amount (solids content) of fluorine surfactants is not particularly limited and can be selected within ranges of typically from 0.01 to 5 parts by weight, preferably from 0.02 to 3 parts by weight, and more preferably from 0.03 parts by weight to 1 parts by weight, per 100 parts by weight of total monomer components for constituting the base polymer of microsphere-containing polymerizable composition [particularly per 100 parts by weight of total monomer components for constituting the base acrylic polymer containing alkyl (meth)acrylates as main monomer components]. Fluorine surfactants, if contained in an amount of less than 0.01 the part, may not sufficiently act to reduce adhesion and frictional drag between the microspheres and polymer in the microsphere-containing viscoelastic layer (X). In contrast, fluorine surfactants, if contained in an amount of more than 5 parts by weight, may be so expensive and cause high cost, or the resulting adhesive tape or sheet may show insufficient adhesive properties.

The microsphere-containing polymerizable composition for the formation of microsphere-containing viscoelastic layer (X) may further contain suitable additives according to the use, in addition to the above-mentioned components such as the fluorine surfactants, base polymer, hollow microspheres, and polymerization initiator. Exemplary usable additives include crosslinking agents such as polyisocyanate crosslinking agents, silicone crosslinking agents, epoxy crosslinking agents, and alkyl-etherified melamine crosslinking agents; tackifiers including tackifiers that are solid, semisolid, or liquid at ambient temperature (room temperature) and are made from materials such as rosin derivative resins, polyterpene resins, petroleum resins, and oil-soluble phenolic resins; plasticizers; fillers; age inhibitors; and colorants such as pigments and dyestuffs. Typically, a microsphere-containing viscoelastic layer (X), if formed by using a photoinitiator, may be colored by using pigments (coloring pigments) within ranges not inhibiting photopolymerization. When the microsphere-containing viscoelastic layer (X) is to be colored to black, for example, carbon black may be used as a coloring pigment. The amount of carbon black, if used as a coloring pigment, is typically preferably 0.15 part by weight or less (for example, 0.001 to 0.15 part by weight), and more preferably 0.02 to 0.1 part by weight, per 100 parts by weight of total monomer components for constituting the base polymer of microsphere-containing polymerizable composition [particularly per 100 parts by weight of total monomer components for constituting the base acrylic polymer containing alkyl (meth)acrylates as main monomer components], from the viewpoints that the layer is colored to a desired degree and that the carbon black does not adversely affect photopolymerization.

In a preferred embodiment, bubbles, if to be contained in the microsphere-containing viscoelastic layer (X), is incorporated as a last component into the microsphere-containing polymerizable composition. In a more preferred embodiment, the microsphere-containing polymerizable composition before incorporation of bubbles (hereinafter also referred to as a "precursor for microsphere-containing cellular polymerizable composition") has an increased viscosity to give a microsphere-containing cellular polymerizable composition. According to these embodiments, bubbles can disperse into and be contained in the microsphere-containing viscoelastic layer (X) more stably. The viscosity of the precursor for microsphere-containing cellular polymerizable composition is not particularly limited, as long as being such a viscosity as to maintain the contained bubbles stably, but the viscosity is, for example, preferably 5 to 50 Pa.s and more preferably 10 to 40 Pa.s, as measured with a BH type viscometer as a viscometer using a No. 5 rotor at a number of revolutions of 10 rpm and at a temperature of 30°C. A precursor for microsphere-containing cellular polymerizable composition, if having an excessively low viscosity (BH type viscometer, No. 5 rotor, 10 rpm, 30°C) of less than 5 Pa.s, may not satisfactorily bear bubbles, because incorporated bubbles can immediately coalesce to escape out of the system. In contrast, a precursor for microsphere-containing cellular polymerizable composition, if having an excessively high viscosity of more than 50 Pa.s, may be difficult to give a satisfactory microsphere-containing viscoelastic layer (X).

The viscosity of precursor for microsphere-containing cellular polymerizable composition may be adjusted, for example, by incorporating various polymer components such as acrylic rubbers and thickening additives; or by polymerizing part of monomer components constituting the base polymer [e.g., monomer components such as alkyl (meth) acrylates for forming acrylic base polymers]. Specifically but only by way of example, a precursor for microsphere-containing cellular polymerizable composition having such a suitable viscosity for stably bearing and holding bubbles can be prepared by mixing monomer components for constituting the base polymer [e.g., monomer components such as alkyl (meth)acrylates for forming acrylic polymers] with polymerization initiators (such as photoinitiators) to give a monomer mixture; carrying out a polymerization reaction of the monomer mixture corresponding to the type of polymerization initiators, to give a partially polymerized composition (syrup) in which only part of the monomer components have been polymerized; and incorporating fluorine surfactants, microspheres, and additives according to necessity into the syrup. By incorporating bubbles into the resulting precursor, a microsphere-containing cellular polymerizable composition stably containing bubbles is obtained. Fluorine surfactants and microspheres may be previously incorporated into the monomer mixture as appropriate before the preparation of the syrup.

The way to incorporate bubbles into the precursor is not particularly limited, and a known technique for mixing or blending bubbles into such compositions can be employed. An exemplary device for use herein is one that includes a disc having a through hole at the center part, a stator having a multiplicity of fine teeth and arranged on the disc, and a rotor facing the stator, having a multiplicity of fine teeth, and arranged on the disc. Using this device, the precursor for microsphere-containing cellular polymerizable composition is introduced in between the teeth of the stator and the teeth of the rotor, and a gaseous component for constituting bubbles (bubble-constituting gas) is introduced via the through hole into the precursor for microsphere-containing cellular polymerizable composition while rotating the rotor at high speed, to allow the bubble-constituting gas to be finely divided and disperse in the precursor, to give a microsphere-containing cellular polymerizable composition bearing finely dispersed bubbles.

To suppress or prevent coalescence of bubbles, it is desirable to carry out the steps from the incorporation of bubbles to the formation of the microsphere-containing viscoelastic layer (X) continuously as a series of steps. Specifically, it is desirable that a microsphere-containing cellular polymerizable composition is prepared by blending bubbles in the above-mentioned way, and the resulting microsphere-containing cellular polymerizable composition is immediately used for the formation of the microsphere-containing viscoelastic layer (X) according typically to the process of forming a microsphere-containing viscoelastic layer (X) mentioned below.

The way to form the microsphere-containing viscoelastic layer (X) is not particularly limited. Typically, the viscoelastic layer (X) may be formed by applying a microsphere-containing polymerizable composition to a suitable carrier such as a release film or base to form a layer of microsphere-containing polymerizable composition, and curing (e.g., thermal curing or curing upon the application of an active energy ray) and/or drying the layer according to necessity. Curing by the application of an active energy ray (photocuring), if employed, is preferably carried out with blocking oxygen typically by protecting the layer typically with a release film (separator) applied thereto, or by carrying out the photocuring in a nitrogen atmosphere, because atmospheric oxygen may adversely affect the photopolymerization reaction. The release film (separator) used in the formation of the microsphere-containing viscoelastic layer (X) may be removed during a suitable step in the production of the acrylic pressure-sensitive adhesive sheet or may be removed upon use of the produced acrylic pressure-sensitive adhesive sheet.

The thickness of the microsphere-containing viscoelastic layer (X) is not particularly limited and can be set within ranges of typically from 200 to 5000 μm, preferably from 300 to 4000 μm, and more preferably from 400 to 3000 μm. A microsphere-containing viscoelastic layer (X), if having a thickness of less than 200 μm, may show insufficient cushioning properties, and the resulting adhesive tape or sheet may insufficiently adhere to curved surfaces or uneven surfaces. In contrast, a microsphere-containing viscoelastic layer (X), if having a thickness of more than 5000 μm, may inhibit the formation of the layer (X) having a homogeneous thickness or of the sheet having a homogeneous thickness. The microsphere-containing viscoelastic layer (X) may have a single-layer structure or multilayer structure.

The microsphere-containing viscoelastic layer (X) can be a pressure-sensitive adhesive sheet having such an adhesive strength necessary as a pressure-sensitive adhesive sheet, by controlling the type and amount of base polymer and the types and amounts of other components such as additives, to be contained in the microsphere-containing viscoelastic layer (X). The microsphere-containing viscoelastic layer (X) can also be a non-adhesive sheet working as a carrier by suitably selecting its formulation (composition).

(Release Films)

A release film (separator) is used in the production of the acrylic pressure-sensitive adhesive sheet or used as a protector typically for adhesive face of the produced acrylic pressure-sensitive adhesive sheet before use. The release film is not necessarily used in the production of the acrylic pressure-sensitive adhesive sheet but is preferably used so as to cover the surface of sheet to thereby prevent the sheet from contact with oxygen, because oxygen typically in the air may adversely affect the photopolymerization reaction. The release film is generally peeled off when the acrylic pressure-sensitive adhesive sheet is used.

The release film is not particularly limited, as long as being able to block oxygen and to permeate rays (light). Exemplary release films include bases having a releasably treated surface treated with a release agent (parting agent) at least on one side; as well as bases showing low adhesion and made typically from fluorine polymers such as polytetrafluoroethylenes, polychlorotrifluoroethylenes, poly(vinyl fluoride)s, poly(vinylidene fluoride)s, tetrafluoroethylene/hexafluoropropylene copolymers, and chlorofluoroethylene/vinylidene fluoride copolymers); and bases showing low adhesion and made from apolar polymers including olefinic resins such as polyethylenes and polypropylenes. Such a low-adhesive base can use both sides as releasable surfaces. In contrast, a base having one or two releasably treated

surfaces can use the releasably treated surface(s) as releasable surface(s).

Exemplary bases in the bases having a releasably treated surface on at least one side include plastic base films (synthetic resin films) including polyester films such as poly(ethylene terephthalate) films; olefinic resin films such as polyethylene films and polypropylene films; poly(vinyl chloride) films; polyimide films; polyamide films such as nylon films; and rayon films. Exemplary bases further include paper bases, i.e., bases made of papers such as woodfree papers, Japanese papers, kraft papers, glassine papers, synthetic papers, and topcoat papers. Among these bases, polyester films such as poly(ethylene terephthalate) films are preferably used.

The release agent (parting agent) is not particularly limited, and examples thereof include silicone release agents, fluorine release agents, and long-chain alkyl release agents. Each of different release agents may be used alone or in combination. The release film may be prepared, for example, according to a common procedure.

The thickness of release film is not particularly limited, as long as being able to block oxygen and to permeate rays (light). The release film can have a single-layer structure or multilayer structure.

(Adherends)

Hard-to-adhere adherends to which the pressure-sensitive adhesive sheets according to the present invention are applied are not particularly limited and include, but are not limited to, coatings such as acid-rain resistant coatings and automotive coatings; painted plates, resinous plates, and metallic plates such as stainless steel plates. The hard-to-adhere adherends to which the pressure-sensitive adhesive sheets are applied can have any shapes not limited. Typically, the hard-to-adhere adherends can be adherends having flat (two-dimensional) shapes or three-dimensionally curved shapes; or can be molded articles having flat shapes or three-dimensionally curved shapes and having coatings thereon.

The coatings are not particularly limited and include, for example, various coatings such as polyester/melamine coatings, alkyd/melamine coatings, acrylic/melamine coatings, acrylic/urethane coatings, acrylic/polyacid curing agent coatings, and acid anhydride/epoxy coatings.

In a preferred embodiment, the acrylic pressure-sensitive adhesive sheet is applied to coatings having a low melamine content or containing no melamine. In a more preferred embodiment, the acrylic pressure-sensitive adhesive sheet is applied to coatings having a ratio of the peak derived from ester stretching vibration at 1730 $cm^{-1}$ (ester peak; ester absorption intensity; ester intensity) to the peak derived from melamine stretching vibration at 814 $cm^{-1}$ (melamine peak; melamine absorption intensity; melamine intensity) [melamine/ester peak ratio (intensity ratio (peak ratio) of melamine to ester)] of 0.4 or less (for example, 0 to 0.4), preferably 0.3 or less (for example, 0 to 0.3), and more preferably 0.2 or less (for example, 0 to 0.2), as determined through attenuated total reflectance measurement (ATR) using Fourier transform infrared spectroscopy (FT-IR). In this connection, acrylic/melamine coatings have large melamine/ester peak ratios, because they have undergone crosslinking with melamine. In contrast, acid-rain resistant coatings have small melamine/ester peak ratios, because they have not undergone crosslinking with melamine.

More specifically, the melamine/ester peak ratio is determined through ATR using FT-IR, in which the melamine peak is defined as the height of top of peak at 814 $cm^{-1}$ from a base line as a line passing from 725 $cm^{-1}$ to 825 $cm^{-1}$; the ester peak is defined as the height of top of peak at 1730 $cm^{-1}$ from a base line as a line passing from 1660 $cm^{-1}$ to 1780 $cm^{-1}$, and the melamine/ester peak ratio is determined from the measured melamine peak and ester peak according to the following equation:

$$(\text{Melamine/ester peak ratio}) = (\text{Melamine peak})/(\text{Ester peak})$$

In another preferred embodiment, the acrylic pressure-sensitive adhesive sheet is advantageously applied to coatings on which surface control agents bleed. This advantage is probably because the tackifier (c) contained in the pressure-sensitive adhesive layer (Y) forms a specific compatible or miscible state, thereby absorbs bleeding components and allows them to diffuse into the pressure-sensitive adhesive layer (Y). Exemplary surface control agents include, but are not limited to, acrylic, vinyl, silicone, fluorine, and other various surface control agents.

In a more preferred embodiment, the acrylic pressure-sensitive adhesive sheet is advantageously applied to coatings on which acrylic or silicone surface control agents bleed. This advantage is probably because the tackifier (c) more effectively and easily absorbs and diffuses such acrylic or fluorine bleeding components.

(Method for Producing Acrylic Pressure-Sensitive Adhesive Sheets)

A method for producing the acrylic pressure-sensitive adhesive sheet according to the present invention is not particularly limited, as long as being able to give an acrylic pressure-sensitive adhesive sheet that includes at least a microsphere-containing viscoelastic layer (X) and, arranged on one or both sides thereof, a pressure-sensitive adhesive layer (Y). An exemplary method is a method for producing the acrylic pressure-sensitive adhesive tape or sheet, which method includes the step of providing a pressure-sensitive adhesive layer (Y) on at least one side of a microsphere-containing viscoelastic layer (X), in which the viscoelastic layer (X) is formed from a polymerizable composition containing microspheres and an alkyl (meth)acrylate as a main monomer component, the pressure-sensitive adhesive layer (Y) is formed from an acrylic pressure-sensitive adhesive composition through the application of an active energy ray, and the acrylic pressure-sensitive adhesive composition contains (a) a vinyl monomer mixture mainly containing an alkyl (meth) acrylate (a1) whose alkyl moiety has 2 to 14 carbon atoms, or a partial polymer of the vinyl monomer mixture; (b) a photoinitiator; and (c) an alkylphenol tackifier.

Exemplary processes of providing or arranging a pressure-sensitive adhesive layer (Y) on at least one side of a microsphere-containing viscoelastic layer (X) include a process of independently preparing a microsphere-containing viscoelastic layer (X) and a pressure-sensitive adhesive layer (Y), and laminating them with each other; a process of applying an acrylic pressure-sensitive adhesive composition to one or both sides of a previously prepared microsphere-containing viscoelastic layer (X) to form a layer of acrylic pressure-sensitive adhesive composition, and polymerizing the composition by the application of an active energy ray to give a pressure-sensitive adhesive layer (Y); and a process of applying a microsphere-containing polymerizable composition to one side of a previously prepared pressure-sensitive adhesive layer (Y) to give a layer of microsphere-containing polymerizable composition, and polymerizing the composition to give a microsphere-containing viscoelastic layer (X).

Exemplary processes for forming a pressure-sensitive adhesive layer (Y) on at least one side of a microsphere-containing viscoelastic layer (X) further include a process of stacking a layer of acrylic pressure-sensitive adhesive composition on one or both sides of a layer of microsphere-containing polymerizable composition containing a photoinitiator and monomers to give a laminate, and applying an active energy ray to the laminate to thereby form a microsphere-containing viscoelastic layer (X) and a pressure-sensitive adhesive layer (Y) simultaneously. The acrylic pressure-sensitive adhesive sheet can be produced with good productivity by a method using the above process as a process for forming a pressure-sensitive adhesive layer (Y) on at least one side of a microsphere-containing viscoelastic layer (X). Additionally, the resulting acrylic pressure-sensitive adhesive sheet produced by the method includes the microsphere-containing viscoelastic layer (X) satisfactorily integrated with the pressure-sensitive adhesive layer (Y) and can thereby show further improved bond strength.

## Examples

The present invention will be illustrated in further detail with reference to several examples below. It should be noted, however, these examples are never construed to limit the scope of the present invention.

(Preparation Example of Monomer Syrup)

To a monomer mixture containing 90 parts by weight of 2-ethylhexyl acrylate and 10 parts by weight of acrylic acid, were added 0.05 part by weight of a photoinitiator (supplied under the trade name "Irgacure 651" by Ciba Specialty Chemicals Corporation) and 0.05 part by weight of another photoinitiator (supplied under the trade name "Irgacure 184" by Ciba Specialty Chemicals Corporation), followed by application of an ultraviolet ray to a viscosity (BH type viscometer, No. 5 rotor, 10 rpm, measured at a temperature of 30°C) of 15 Pa.s, to thereby give a partially polymerized composition (syrup).

(Preparation Example of Microsphere-Containing Cellular Polymerizable Composition)

To 100 parts by weight of the syrup was added 0.1 part by weight of 1,6-hexanediol diacrylate, followed by further adding hollow glass balloons (supplied under the trade name "CEL-STAR Z-27" by Tokai Kogyo Co., Ltd.) to an amount of 30 percent by volume based on the total volume of the partially polymerized monomer syrup.
The syrup containing the hollow glass balloons was combined with 1 part by weight of a fluorine surfactant (supplied under the trade name "Surflon S-393" by AGC Seimi Chemical Co., Ltd.; an acrylic copolymer having polyoxyethylene groups and fluorinated hydrocarbon groups in side chain and having a weight-average molecular weight Mw of 8300) and thereby yielded a precursor for microsphere-containing cellular polymerizable composition. The precursor had a content of hollow glass balloons of about 23 percent by volume based on the total volume of the precursor.
A device used herein was one that includes a disc having a through hole at the center part, a stator having a multiplicity

of fine teeth and arranged on the disc, and a rotor facing the stator, having a multiplicity of fine teeth, and arranged on the disc. Using this device, the precursor for microsphere-containing cellular polymerizable composition was introduced in between the teeth of the stator and the teeth of the rotor, and nitrogen gas was introduced via the through hole into the precursor while rotating the rotor at high speed, to allow nitrogen gas to be divided and disperse into the precursor, to give a microsphere-containing cellular polymerizable composition. The bubbles were incorporated to about 15 percent by volume to the total volume of the precursor for microsphere-containing cellular polymerizable composition.

(Preparation Example 1 of Acrylic Pressure-Sensitive Adhesive Composition)

An acrylic pressure-sensitive adhesive composition (hereinafter also referred to as an "acrylic pressure-sensitive adhesive composition (A)") was prepared by blending and stirring 100 parts by weight of the monomer syrup with 10 parts by weight of a 50% toluene solution of a phenolic resin (supplied under the trade name "SUMILITERESIN PR 19900" by Sumitomo Bakelite Co., Ltd.) and 0.08 part by weight of 1,6-hexanediol diacrylate.

(Preparation Example 2 of Acrylic Pressure-Sensitive Adhesive Composition)

An acrylic pressure-sensitive adhesive composition (hereinafter also referred to as an "acrylic pressure-sensitive adhesive composition (B)") was prepared by blending and stirring 100 parts by weight of the monomer syrup with 20 parts by weight of a 50% toluene solution of a phenolic resin (supplied under the trade name "SUMILITERESIN PR 19900" by Sumitomo Bakelite Co., Ltd.) and 0.08 part by weight of 1,6-hexanediol diacrylate.

(Preparation Example 3 of Acrylic Pressure-Sensitive Adhesive Composition)

An acrylic pressure-sensitive adhesive composition (hereinafter also referred to as an "acrylic pressure-sensitive adhesive composition (C)") was prepared by blending and stirring 100 parts by weight of the monomer syrup with 0.08 part by weight of 1,6-hexanediol diacrylate.

(Preparation Example 4 of Acrylic Pressure-Sensitive Adhesive Composition)

An acrylic pressure-sensitive adhesive composition (hereinafter also referred to as an "acrylic pressure-sensitive adhesive composition (D)") was prepared by blending and stirring 100 parts by weight of the monomer syrup with 40 parts by weight of a 50% toluene solution of a phenolic resin (supplied under the trade name "SUMILITERESIN PR 19900" by Sumitomo Bakelite Co., Ltd.) and 0.08 part by weight of 1,6-hexanediol diacrylate.

(Example of Release Film To Be Used)

A poly(ethylene terephthalate) base (supplied under the trade name "MRF" by Mitsubishi Polyester Film GmbH (Mitsubishi Plastics, Inc.)), one side of which had been subjected to release treatment, was used as a release film.

(EXAMPLE 1)

The microsphere-containing cellular polymerizable composition was introduced onto a roll coater for wet lamination through a tube having a diameter of 19 mm and a length of 1.5 m, and using the roll coater, the microsphere-containing cellular polymerizable composition was applied to between two plies of the release film, so as to give a layer of microsphere-containing cellular polymerizable composition with a thickness after drying and curing of 1.0 mm. Thus, a sheet having the layer of microsphere-containing cellular polymerizable composition was prepared. The sheet includes the layer of microsphere-containing cellular polymerizable composition sandwiched between the two release films so that the layer is in contact with the releasably treated surfaces of the two release films. Next, an ultraviolet ray was applied at an illuminance of 5 $mW/cm^3$ to both sides of the sheet for 3 minutes to cure the layer of microsphere-containing cellular polymerizable composition to give a sheet including a microsphere-containing cellular viscoelastic layer, both sides of which were protected by the release films (hereinafter also referred to as a "sheet of microsphere-containing cellular viscoelastic layer").

Independently, the acrylic pressure-sensitive adhesive composition (A) was applied to a releasably treated surface of another ply of the release film, so as to give a layer of acrylic pressure-sensitive adhesive composition with a thickness after drying and curing of 50 $\mu$m. Yet another ply of the release film was arranged on the layer so that the releasably treated surface was in contact with the layer, whereby a sheet having the layer of acrylic pressure-sensitive adhesive composition was prepared. Next, an ultraviolet ray was applied at an illuminance of 5 $mW/cm^3$ to both sides of the sheet for 3 minutes to cure the layer of acrylic pressure-sensitive adhesive composition; one of the two release films was

peeled off, the layer of cured acrylic pressure-sensitive adhesive composition was dried at 130°C for 3 minutes, and thereby yielded a sheet having an acrylic pressure-sensitive adhesive layer arranged on the releasably treated surface of the release film (hereinafter also referred to as a "sheet of acrylic pressure-sensitive adhesive layer").
The sheet of acrylic pressure-sensitive adhesive layer was applied to the sheet of microsphere-containing cellular viscoelastic layer, from which one of the two release films was removed to expose the microsphere-containing cellular viscoelastic layer, so that the microsphere-containing cellular viscoelastic layer was in contact with the acrylic pressure-sensitive adhesive layer. The laminate was left stand for 48 hours and thereby yielded a pressure-sensitive adhesive sheet including a microsphere-containing cellular viscoelastic layer and, arranged on one side thereof, an acrylic pressure-sensitive adhesive layer.
The acrylic pressure-sensitive adhesive layer had a gel fraction of 70%.

(EXAMPLE 2)

A pressure-sensitive adhesive sheet including a microsphere-containing cellular viscoelastic layer and, arranged on one side thereof, an acrylic pressure-sensitive adhesive layer was prepared by the procedure of Example 1, except for using the acrylic pressure-sensitive adhesive composition (B) instead of the acrylic pressure-sensitive adhesive composition (A).
The acrylic pressure-sensitive adhesive layer had a gel fraction of 75%.

(EXAMPLE 3)

A pressure-sensitive adhesive sheet including a microsphere-containing cellular viscoelastic layer and, arranged on one side thereof, an acrylic pressure-sensitive adhesive layer was prepared by the procedure of Example 1, except for using the acrylic pressure-sensitive adhesive composition (D) instead of the acrylic pressure-sensitive adhesive composition (A).
The acrylic pressure-sensitive adhesive layer had a gel fraction of 80%.

(COMPARATIVE EXAMPLE 1)

A pressure-sensitive adhesive sheet including a microsphere-containing cellular viscoelastic layer and, arranged on one side thereof, an acrylic pressure-sensitive adhesive layer was prepared by the procedure of Example 1, except for using the acrylic pressure-sensitive adhesive composition (C) instead of the acrylic pressure-sensitive adhesive composition (A).
The acrylic pressure-sensitive adhesive layer had a gel fraction of 80%.

(Evaluations)

The adhesive strength of the pressure-sensitive adhesive sheets according to Examples 1 to 3 and Comparative Example 1 were measured according to the following "technique for measuring adhesive strength" as adhesive strengths to an acrylic/melamine coating (after cleansing), to an acid-rain resistant coating (after cleansing), and to an acid-rain resistant coating (before cleansing (uncleansed)), respectively. The results are shown in Table 1.

(Technique for Measuring Adhesive Strength)

The release film of each of the pressure-sensitive adhesive sheets according to Examples and Comparative Example was removed in an atmosphere at 23°C to expose the acrylic pressure-sensitive adhesive layer; the exposed acrylic pressure-sensitive adhesive layer was affixed to an adherend through compression bonding by one-way moving of a 5-kg roller thereon; and the resulting article was aged at 23°C for 30 minutes. After aging, the pressure-sensitive adhesive sheet was peeled off from the adherend at a peel angle of 180° and a rate of pulling of 50 mm per minute. Thus, an adhesive strength to the adherend was measured.

(Technique for Determining Melamine/Ester Peak Ratio)

The melamine/ester peak ratio of a sample was determined by cleansing the sample with isopropyl alcohol and measuring an infrared (IR) spectrum of the cleansed sample.
The IR spectrum was measured according to ATR using FT-IR by using the "Spectrum 2000 FT-IR" (The Perkin-Elmer Corporation) with a germanium 45-degree prism at a number of totalization of 16, a resolution of 4.0 $cm^{-1}$, and a gain of 1.
The melamine peak was defined as the height of top of peak at 814 $cm^{-1}$ from a base line as a line passing from 725

$cm^{-1}$ to 825 $cm^{-1}$.
The ester peak was defined as the height of top of peak at 1730 $cm^{-1}$ from a base line as a line passing from 1660 $cm^{-1}$ to 1780 $cm^{-1}$.
Based on these data, the melamine/ester peak ratio was determined according to the following equation:

$$(\text{Melamine/ester peak ratio}) = (\text{Melamine peak})/(\text{Ester peak})$$

[Adhesive Strength to Acrylic/Melamine Coating (After Cleansing)]

The surface of an acrylic/melamine-coated plate (supplied under the trade name "M90" by Kansai Paint Co., Ltd.) was cleansed by wiping the surface with a waste cloth impregnated with isopropyl alcohol through ten reciprocating motions.
Using the cleansed acrylic/melamine-coated plate, the adhesion of a sample to the acrylic/melamine coating (after cleansing) was measured according to the above technique.
The intensity ratio (peak ratio) of melamine to ester was 0.56.

[Adhesive Strength to Acid-Rain Resistant Coating (After Cleansing)]

The surface of an acid-rain resistant coated plate (supplied under the trade name "KINO-1200 TW" by Kansai Paint Co., Ltd.) was cleansed by wiping the surface with a waste cloth impregnated with isopropyl alcohol through ten reciprocating motions.
Using the cleansed acid-rain resistant coated plate, the adhesion of a sample to the acid-rain resistant coating (after cleansing) was measured according to the above technique.
The intensity ratio (peak ratio) of melamine to ester was 0.03.

[Adhesive Strength to Acid-Rain Resistant Coating (Uncleansed)]

Using an acid-rain resistant coated plate (supplied under the trade name "KINO-1200 TW" by Kansai Paint Co., Ltd.), the adhesion of a sample to an acid-rain resistant coating (uncleansed) was measured according to the above technique.
The intensity ratio of melamine to ester was 0.03.

[Table 1]

Table 1

| | Acrylic/melamine coating (melamine/ester peak ratio of 0.56) (cleansed) [N/25 mm] | Acid-rain resistant coating (melamine/ester peak ratio of 0.03) | |
|---|---|---|---|
| | | (cleansed) [N/25 mm] | (uncleansed) [N/25 mm] |
| Example 1 | 56 | 55 | 22 |
| Example 2 | 63 | 62 | 24 |
| Example 3 | 63 | 54 | 32 |
| Comparative Example 1 | 52 | 42 | 18 |

It is demonstrated that the pressure-sensitive adhesive tapes according to the examples show satisfactory adhesion to acrylic/melamine coatings and acid-rain resistant coatings.
It is also demonstrated that the pressure-sensitive adhesive tapes according to the examples show satisfactory adhesion even to uncleansed coatings on which a surface control agent bleeds out. This is probably because the bled surface

control agent on the surface of coating is absorbed by the pressure-sensitive adhesive layer.

Industrial Applicability

The acrylic pressure-sensitive adhesive tapes or sheets according to the present invention show satisfactory adhesion. Particularly, they show satisfactory adhesion to hard-to-adhere adherends. Of such hard-to-adhere adherends, the acrylic pressure-sensitive adhesive tapes or sheets are useful to hard-to-adhere adherends such as acid-rain resistant coatings and automotive coatings which have surface control agent layers (films of bled surface control agents) formed as a result of bleeding of surface control agents.

## Claims

1. An acrylic pressure-sensitive adhesive tape or sheet comprising a microsphere-containing viscoelastic layer (X); and a pressure-sensitive adhesive layer (Y) arranged on at least one side of the viscoelastic layer (X), wherein the pressure-sensitive adhesive layer (Y) is derived from an acrylic pressure-sensitive adhesive composition through the application of an active energy ray, and wherein the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier.

2. The acrylic pressure-sensitive adhesive tape or sheet according to claim 1, wherein the acrylic pressure-sensitive adhesive composition comprises 0.001 to 5 parts by weight of the photoinitiator (b) and 0.01 to 25 parts by weight of the alkylphenol tackifier (c) per 100 parts by weight of the vinyl monomer mixture or a partial polymer thereof (a).

3. The acrylic pressure-sensitive adhesive tape or sheet according to one of claims 1 and 2, wherein the microsphere-containing viscoelastic layer (X) contains microspheres and an acrylic base polymer containing an alkyl (meth)acrylate as a main monomer component.

4. The acrylic pressure-sensitive adhesive tape or sheet according to any one of claims 1 to 3, wherein the viscoelastic layer (X) is a layer derived from an acrylic polymerizable composition containing microspheres through the application of an active energy ray, and wherein the acrylic polymerizable composition comprises microspheres; an alkyl (meth)acrylate as a main monomer component; and a photoinitiator.

5. The acrylic pressure-sensitive adhesive tape or sheet according to any one of claims 1 to 4, wherein the microspheres contained in the viscoelastic layer (X) are hollow glass balloons.

6. The acrylic pressure-sensitive adhesive tape or sheet according to any one of claims 1 to 5, for use to a coating (painted film).

7. The acrylic pressure-sensitive adhesive tape or sheet according to claim 6, wherein the coating is an acid-rain resistant coating.

8. The acrylic pressure-sensitive adhesive tape or sheet according to claim 6, wherein the coating is an automotive coating.

9. The acrylic pressure-sensitive adhesive tape or sheet according to any one of claims 6 to 8, wherein the coating has such a melamine content that the ratio of a melamine peak to an ester peak is 0.4 or less, wherein the melamine peak is a peak derived from stretching vibration of melamine at 814 $cm^{-1}$, and the ester peak is a peak derived from stretching vibration of ester bond at 1730 $cm^{-1}$, both determined through attenuated total reflectance measurement (ATR) using Fourier transform infrared spectroscopy (FT-IR).

10. The acrylic pressure-sensitive adhesive tape or sheet according to any one of claims 6 to 9, wherein the coating comprises a surface control agent.

11. A method for producing the acrylic pressure-sensitive adhesive tape or sheet of any one of claims 1 to 10, the method comprising the step of providing a pressure-sensitive adhesive layer (Y) on at least one side of a microsphere-containing viscoelastic layer (X), wherein the viscoelastic layer (X) is formed from a polymerizable composition containing microspheres and an alkyl (meth)acrylate as a main monomer component, wherein the pressure-sensitive

adhesive layer (Y) is formed from an acrylic pressure-sensitive adhesive composition through the application of an active energy ray, and wherein the acrylic pressure-sensitive adhesive composition contains (a) a vinyl monomer mixture mainly containing an alkyl (meth)acrylate (a1) whose alkyl moiety has 2 to 14 carbon atoms, or a partial polymer of the vinyl monomer mixture; (b) a photoinitiator; and (c) an alkylphenol tackifier.

**INTERNATIONAL SEARCH REPORT**

International application No.
PCT/JP2007/069720

A. CLASSIFICATION OF SUBJECT MATTER
*C09J7/02*(2006.01)i, *B32B27/00*(2006.01)i, *B32B27/30*(2006.01)i, *C09J133/08*(2006.01)i

According to International Patent Classification (IPC) or to both national classification and IPC

B. FIELDS SEARCHED

Minimum documentation searched (classification system followed by classification symbols)
C09J7/02, B32B27/00, B32B27/30, C09J133/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-265368 A (Nitto Denko Corp.), 05 October, 2006 (05.10.06), Claims; Par. Nos. [0003], [0079] (Family: none) | 1-11 |
| Y | JP 2000-248241 A (Sliontec Corp.), 12 September, 2000 (12.09.00), Par. No. [0024] (Family: none) | 1-11 |
| Y | JP 8-259910 A (Bando Chemical Industries, Ltd.), 08 October, 1996 (08.10.96), Par. No. [0013] & US 4720317 A & US 4818621 A & EP 191534 B | 1-11 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 January, 2008 (10.01.08) | 22 January, 2008 (22.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2007/069720

C (Continuation). DOCUMENTS CONSIDERED TO BE RELEVANT

| Category* | Citation of document, with indication, where appropriate, of the relevant passages | Relevant to claim No. |
|---|---|---|
| Y | JP 6-508168 A (Minnesota Mining and Manufacturing Co.), 14 September, 1994 (14.09.94), Page 3, lower right column, lines 4 to 19 & WO 92/20751 A1 & EP 587752 B1 & US 5308887 A & DE 69221148 E | 6-11 |
| A | JP 2005-179561 A (Nitto Denko Corp.), 07 July, 2005 (07.07.05), (Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI06108001 A
- JP 2002066206 A
- JP 2002226834 A
- JP HEI073236 A
- JP 2002241709 A